Europäisches Patentamt

European Patent Office

Office européen des brevets

(19)

(11) Veröffentlichungsnummer : **0 450 625 B1**

## (12) EUROPÄISCHE PATENTSCHRIFT

(45) Veröffentlichungstag der Patentschrift :
08.06.94 Patentblatt 94/23

(51) Int. Cl.⁵ : **B05D 3/00,** C09D 183/07,
C09D 183/08

(21) Anmeldenummer : **91105356.9**

(22) Anmeldetag : **04.04.91**

(54) **Verfahren zum Beschichten von Kunststoffsubstraten und Lack zur Verwendung in diesem Verfahren.**

(30) Priorität : **05.04.90 DE 4011045**

(43) Veröffentlichungstag der Anmeldung :
**09.10.91 Patentblatt 91/41**

(45) Bekanntmachung des Hinweises auf die
Patenterteilung :
**08.06.94 Patentblatt 94/23**

(84) Benannte Vertragsstaaten :
**BE DE FR GB NL**

(56) Entgegenhaltungen :
**EP-A- 0 171 493
EP-A- 0 358 011
DE-A- 3 100 555
GB-A- 2 137 648**

(73) Patentinhaber :
**FRAUNHOFER-GESELLSCHAFT ZUR
FÖRDERUNG DER ANGEWANDTEN
FORSCHUNG E.V.
Leonrodstrasse 54
D-80636 München (DE)**

(72) Erfinder : **Hörth, Franz-Josef, Dr.
Rodachweg 7
W-8710 Schweinfurt (DE)**
Erfinder : **Rose, Klaus, Dr.
J.-A.-Kleinschroth-Str. 7
W-8710 Kitzingen (DE)**

(74) Vertreter : **Barz, Peter, Dr. et al
Patentanwälte Dipl.-Ing. G. Dannenberg
Dr. P. Weinhold, Dr. D. Gudel
Dipl.-Ing. S. Schubert, Dr. P. Barz
Siegfriedstrasse 8
D-80803 München (DE)**

**Beschreibung**

Zahlreiche Gegenstände, insbesondere Gegenstände aus Kunststoff, müssen mit kratzfesten Beschichtungen versehen werden, da ihre Kratzempfindlichkeit ansonsten keinen praktischen Einsatz oder nur kurze Einsatzzeiten ermöglichen würde.

Silanhydrolysat-Lacke zur Herstellung kratzfester Beschichtungen sind z. B. aus EP-A-171493 und 358011 und DE-A-3100555 bekannt. Diese Beschichtungssysteme lassen jedoch immer noch Raum für Verbesserungen, insbesondere hinsichtlich Kratzbeständigkeit und Haftung auf dem Substrat bei geeigneter Schichtdicke. Eine weitere verbesserungsfähige Eigenschaft der bekannten Beschichtungsmaterialien ist deren Aushärtungszeit. Die Aushärtung erfolgt in der Regel thermisch und/oder durch Bestrahlung, wobei in den meisten Fällen thermische bzw. photochemische Härtungskatalysatoren zugesetzt werden.

Schließlich dringen insbesondere transparente Kunststoffteile zunehmend in Anwendungsbereiche vor, die bisher Gläsern vorbehalten waren, Die Verwendung dieser Kunststoffteile in diesen Bereichen setzt aber voraus, daß die weiche Kunststoffoberfläche wirksam vergütet werden kann ohne daß dabei die Lichtdurchlässigkeit der Kunststoffteile merklich beeinträchtigt wird.

Ziel der vorliegenden Erfindung ist es, ein Verfahren und einen Lack zur Beschichtung von Kunststoffsubstraten bereitzustellen, wobei die resultierende Beschichtung eine hohe Kratzbeständigkeit und gute Haftung auf dem Substrat bei gleichzeitig ausgezeichneten optischen Eigenschaften, insbesondere Transparenz, aufweisen soll. Weiterhin soll sich der Lack in möglichst kurzen Zeiten zufriedenstellend aushärten lassen.

Die obige Aufgabe wird erfindungsgemäß durch ein Verfahren zur Beschichtung eines Kunststoffsubstrats gelöst, das dadurch gekennzeichnet ist, daß man

(a) auf das Kunststoffsubstrat einen Lack aufbringt, der hergestellt wurde durch hydrolytische Kondensation einer oder mehrerer hydrolysierbarer Siliciumverbindungen sowie gegebenenfalls einer oder mehrerer hydrolysierbarer Verbindungen von Aluminium, Titan und/oder Zirkonium in einer Menge von höchstens 50 Molprozent, bezogen auf die Gesamtmenge an Silicium-, Aluminium-, Titan- und Zirkoniumverbindungen, wobei 1 bis 40 Molprozent aller an die obigen Elemente gebundenen Gruppen nicht-hydrolysierbare Gruppen sind, die eine ethylenisch ungesättigte Bindung aufweisen, und zusätzlich an den obigen Elementen nicht-hydrolysierbare Gruppen, die über einen Mercaptorest verfügen, in einer solchen Menge vorhanden sind, daß das Verhältnis von ethylenisch ungesättigten Bindungen zu Mercaptoresten in bzw. an nicht-hydrolysierbaren Gruppen 25:1 bis 1:1 beträgt;

(b) den Lack (gegebenenfalls in Anwesenheit eines Photoinitiators) durch Bestrahlung härtet; und gegebenenfalls

(c) eine thermische Nachhärtung des strahlungsgehärteten Überzugs durchführt; oder

(b') den Lack thermisch härtet.

Ein weiterer Aspekt der vorliegenden Erfindung ist ein Verfahren zur Herstellung eines Lacks für die Beschichtung von Kunststoffsubstraten, das dadurch gekennzeichnet ist, daß man eine oder mehrere hydrolysierbare Siliciumverbindungen sowie gegebenenfalls eine oder mehrere hydrolysierbare Verbindungen von Aluminium, Titan und/oder Zirkonium in einer Menge von höchstens 50 Molprozent, bezogen auf die Gesamtmenge an Silicium-, Aluminium-, Titan- und Zirkoniumverbindungen, in denen 1 bis 40 Molprozent aller nicht-hydrolysierbaren Gruppen eine ethylenisch ungesättigte Bindung aufweisen und in denen zusätzlich hydrolysierbare Gruppen, die über einen Mercaptorest verfügen, in einer solchen Menge vorhanden sind, daß das Verhältnis von ethylenisch ungesättigten Bindungen zu Mercaptoresten in bzw. an nicht-hydrolysierbaren Gruppen 25:1 bis 1:1 beträgt, gegebenenfalls in Anwesenheit eines Katalysators und/oder eines Lösungsmittels durch Einwirkung von Wasser oder Feuchtigkeit hydrolytisch kondensiert.

Ein nach dem obigen Verfahren erhältlicher Lack für die Beschichtung von Kunststoffsubstraten ist ebenfalls Gegenstand der vorliegenden Erfindung.

Obwohl sich unter den obigen hydrolysierbaren Verbindungen auch bis zu 50 Molprozent Verbindungen von Titan, Zirkonium und Aluminium befinden können, liegt der bevorzugte Bereich für diese letztgenannten Verbindungen bei 0 bis 25 Molprozent, insbesondere 0 bis 15 Molprozent. Darüber hinaus können in einer Gesamtmenge von bis zu 5 Molprozent auch andere hydrolysierbare Verbindungen, z.B. solche von Vanadium, Bor, Zinn und Blei vorhanden sein, wenngleich dies nicht bevorzugt wird. Die Menge an hydrolysierbaren Aluminiumverbindungen in der zu hydrolysierenden Mischung soll in der Regel 10 Molprozent nicht überschreiten. Der Ersatz einer (vollständig) hydrolysierbaren Siliciumverbindung durch eine (vollständig) hydrolysierbare Aluminiumverbindung führt im allgemeinen zu einer erhöhten Härte des resultierenden Überzugs. Auch die Gesamtmenge an hydrolysierbaren Titanverbindungen bzw. hydrolysierbaren Zirkoniumverbindungen in der zu hydrolysierenden Reaktionsmischung liegt vorzugsweise jeweils nicht über 10 Molprozent. Insbesondere Zirkonium übt in der Regel eine Weichmacherfunktion in dem ausgehärteten Überzug aus.

Für das erfindungsgemäße Verfahren bzw. für die Herstellung des erfindungsgemäßen Lacks besonders geeignete hydrolysierbare Siliciumverbindungen sind solche der allgemeinen Formel

$$SiX_nR_{4-n} \qquad (I)$$

in der die Reste X, die gleich oder verschieden sein können, ausgewählt sind aus Halogen (F, Cl, Br und I, insbesondere Cl und Br), Alkoxy (insbesondere $C_{1-4}$-Alkoxy, wie z.B. Methoxy, Ethoxy, n-Propoxy, i-Propoxy und Butoxy), Aryloxy (insbesondere $c_{6-10}$ Aryloxy, z.B. Phenoxy), Acyloxy (insbesondere $C_{1-4}$-Acyloxy, wie z.B. Acetoxy und Propionyloxy) und Hydroxy, die Reste R, die gleich oder verschieden sein können, ausgewählt sind aus Alkyl (insbesondere $C_{1-4}$-Alkyl, wie z.B. Methyl, Ethyl, Propyl und Butyl), Alkenyl (insbesondere $C_{2-4}$-Alkenyl, wie z.B. Vinyl, 1-Propenyl, 2-Propenyl und Butenyl), Alkinyl (insbesondere $C_{2-4}$-Alkinyl, wie Acetylenyl und Propargyl) und Aryl (insbesondere $C_{6-10}$-Aryl, wie z.B. Phenyl und Naphthyl), wobei die soeben genannten Gruppen (mit Ausnahme von Halogen und Hydroxy) gegebenenfalls eine oder mehrere unter den Reaktionsbedingungen inerte Substituenten, wie z.B. Halogen und Alkoxy, aufweisen können, und n eine ganze Zahl von 1 bis 4 ist. Die obigen Alkylreste schließen auch die entsprechenden cyclischen und Aryl-substituierten Reste, wie z.B. Cyclohexyl und Benzyl, ein während die Alkenyl und Alkinylgruppen ebenfalls cyclisch sein können und die genannten Arylgruppen auch Alkarylgruppen (wie Tolyl und Xylyl) mit einschließen sollen.

Die erfindungsgemäß vorhandenen Mercapto-(HS)-Reste befinden sich vorzugsweise an den obigen Alkyl- und Arylgruppen, insbesondere den Alkylgruppen.

Neben den oben genannten besonders bevorzugten Resten X können als weitere, ebenfalls geeignete Gruppen genannt werden Wasserstoff und Alkoxyreste mit 5 bis 20, insbesondere 5 bis 10 Kohlenstoffatomen und Halogen- und Alkoxy-substituierte Alkoxygruppen (wie z.B. β-Methoxyethoxy). Weitere geeignete Gruppen R sind geradkettige, verzweigte oder cyclische Alkyl-, Alkenyl- und Alkinylreste mit 5 bis 20, insbesondere 5 bis 10 Kohlenstoffatomen, wie z.B. n-Pentyl, n-Hexyl, Dodecyl und Octadecyl.

Da die Reste X im Endprodukt nicht vorhanden sind, sondern durch Hydrolyse verlorengehen, wobei das Hydrolyseprodukt früher oder später auch in irgendeiner geeigneten Weise entfernt werden muß, sind Reste R besonders bevorzugt, die keine Substituenten tragen und zu Hydrolyseprodukten mit niedrigem Molekulargewicht, wie z.B. niederen Alkoholen, wie Methanol, Ethanol, Propanol, n-, i-, sek- und tert-Butanol, führen.

Die Verbindungen der Formel (I) können ganz oder teilweise in Form von Vorkondensaten eingesetzt werden, d.h. Verbindungen, die durch teilweise Hydrolyse der Verbindungen der Formel (I), entweder allein oder im Gemisch mit anderen hydrolysierbaren Verbindungen, wie sie weiter unten näher beschrieben werden, entstanden sind. Derartige, im Reaktionsmedium vorzugsweise lösliche Oligomere können geradkettige oder cyclische, niedermolekulare Teilkondensate (Polyorganosiloxane) mit einem Kondensationsgrad von z.B. etwa 2 bis 100, insbesondere etwa 2 bis 6, sein.

Unter den erfindungsgemäß vorhandenen nicht-hydrolysierbaren Gruppen R mit ethylenisch ungesättigter Doppelbindung sind die obigen Alkenylreste mit 2 bis 4 Kohlenstoffatomen (insbesondere Vinyl) sowie (Meth)acryloxy-substituierte Alkyl- und Arylgruppen (insbesondere solche mit 2 bis 4 bzw. 6 bis 10 Kohlenstoffatomen, wie z.B. gamma-Methacryloxypropyl) und Styryl besonders bevorzugt. Nicht-hydrolysierbare Gruppen X mit Mercaptorest werden bevorzugt ausgewählt aus Mercaptoalkylresten mit 1 bis 6 Kohlenstoffatomen, wie z.B. 3-Mercaptopropyl, 4-Mercaptobutyl und 6-Mercaptohexyl.

Konkrete Beispiele für (zum Großteil im Handel erhältliche) Verbindungen der allgemeinen Formel (I), die erfindungsgemäß bevorzugt eingesetzt werden, sind Verbindungen der folgenden Formeln:

$Si(OCH_3)_4$, $Si(OC_2H_5)_4$, $Si(O\text{-n- oder i-}C_3H_7)_4$

$Si(OC_4H_9)_4$, $SiCl_4$, $HSiCl_3$, $Si(OOCCH_3)_4$

$CH_3\text{-}SiCl_3$, $CH_3\text{-}Si(OC_2H_5)_3$, $C_2H_5\text{-}SiCl_3$, $C_2H_5\text{-}Si(OC_2H_5)_3$,

$C_3H_7\text{-}Si(OCH_3)_3$, $C_6H_5\text{-}Si(OCH_3)_3$, $C_6H_5\text{-}Si(OC_2H_5)_3$,

$(CH_3O)_3\text{-}Si\text{-}C_3H_6\text{-}Cl$,

$(CH_3)_2SiCl_2$, $(CH_3)_2Si(OCH_3)_2$, $(CH_3)_2Si(OC_2H_5)_2$,

$(CH_3)_2Si(OH)_2$, $(C_6H_5)_2SiCl_2$, $(C_6H_5)_2Si(OCH_3)_2$,

$(C_6H_5)_2Si(OC_2H_5)_2$, $(i\text{-}C_3H_7)_3SiOH$,

$CH_2{=}CH\text{-}Si(OOCCH_3)_3$

$CH_2{=}CH\text{-}SiCl_3$, $CH_2{=}CH\text{-}Si(OCH_3)_3$, $CH_2{=}CH\text{-}Si(OC_2H_5)_3$,

$CH_2{=}CH\text{-}Si(OC_2H_4OCH_3)_3$, $CH_2{=}CH\text{-}CH_2\text{-}Si(OCH_3)_3$,

$CH_2{=}CH\text{-}CH_2\text{-}Si(OC_2H_5)_3$,

$CH_2{=}CH\text{-}CH_2\text{-}Si(OOCCH_3)_3$,

$CH_2{=}C(CH_3)\text{-}COO\text{-}C_3H_7\text{-}Si(OCH_3)_3$,

$CH_2{=}C(CH_3)\text{-}COO\text{-}C_3H_7\text{-}Si(OC_2H_5)_3$,

$HS\text{-}C_3H_7\text{-}Si(OCH_3)_3$,

$HS\text{-}C_3H_7\text{-}Si(OC_2H_5)_3$,

HS-C$_4$H$_8$-Si(OCH$_3$)$_3$,

HS-C$_6$H$_{14}$-Si(OCH$_3$)$_3$.

Diese Silane lassen sich nach bekannten Methoden herstellen; vergleiche W. Noll, "Chemie und Technologie der Silicone", Verlag Chemie GmbH, Weinheim/Bergstraße (1968).

Das Verhältnis der Siliciumverbindungen mit vier, drei, zwei bzw. einem hydrolysierbaren Rest X untereinander richtet sich vor allem nach den gewünschten Eigenschaften des Überzugs. Während Verbindungen der Formel SiX$_4$ sich auf die Kratzfestigkeit des resultierenden Überzugs vorteilhaft auswirken, ist z.B. die Anwesenheit von Verbindungen der Formel SiX$_2$R$_2$ dann erwünscht, wenn ein elastischer und flexibler Überzug hergestellt werden soll. Außerdem erhöht sich bei Anwesenheit der letztgenannten Verbindungen die Topfzeit des Lacks. Verbindungen der Formel SiXR$_3$ werden vorzugsweise nur in geringem Maße, wenn überhaupt, eingesetzt. Mit den letztgenannten Verbindungen lassen sich naturgemäß überproportional viele organische Reste in den Überzug einführen, wobei unter diesen organischen Resten insbesondere die Arylreste den Überzug weicher machen.

Das Molverhältnis von nicht-hydrolysierbaren Gruppen R mit ethylenisch ungesättigter Bindung zu den insgesamt vorhandenen, an Silicium gebundenen (hydrolysierbaren und nicht-hydrolysierbaren) Gruppen beträgt erfindungsgemäß 1:99 bis 40:60. Vorzugsweise sind 5 bis 30 und insbesondere 10 bis 25 Molprozent aller an Silicium (und gegebenenfalls Titan, Zirkonium und Aluminium) gebundenen Gruppen nicht-hydrolysierbare Gruppen, die eine ethylenisch ungesättigte Bindung aufweisen.

Das Molverhältnis aller in nicht-hydrolysierbaren Gruppen anwesenden ethylenisch ungesättigten Bindungen zu allen an nicht-hydrolysierbare Gruppen gebundenen Mercaptoresten beträgt erfindungsgemäß 25:1 bis 1:1, bevorzugt jedoch 20:1 bis 2:1, wobei besonders bevorzugte Molverhältnisse im Bereich von 10:1 bis 5:1 liegen.

Besonders gute Ergebnisse werden dann erzielt, wenn das Molverhältnis aller nicht-hydrolysierbaren Gruppen mit ethylenisch ungesättigter Bindung zu allen hydrolysierbaren Gruppen und Hydroxygruppen 1:1 bis 1:50 beträgt. Vorzugsweise liegt dieses Molverhältnis im Bereich von 1:2 bis 1:30 und insbesondere 1:3 bis 1:15.

Der Anteil der nicht-hydrolysierbaren Gruppen mit ethylenisch ungesättigter Bindung an den insgesamt vorhandenen nicht-hydrolysierbaren Gruppen sollte sich in der Regel im Bereich von 2 bis 96% bewegen. Besonders günstige Ergebnisse können erhalten werden, wenn dieser Anteil 3 bis 50% und insbesondere 7 bis 30% beträgt.

Die obigen Verhältnisse lassen sich durch geeignete Wahl der hydrolysierbaren Siliciumverbindungen (und gegebenenfalls der hydrolysierbaren Verbindungen von Aluminium, Titan und Zirkonium) sowie durch ein geeignetes Verhältnis an eingesetzten Verbindungen mit vier, drei, zwei und einer hydrolysierbaren Gruppe pro Molekül in vielfältiger Weise einstellen. Zur Herstellung des erfindungsgemäßen Lacks kann prinzipiell eine einzige Verbindung eingesetzt werden, nämlich eine solche hydrolysierbare Siliciumverbindung, die sowohl eine nicht-hydrolysierbare Gruppe mit ethylenisch ungesättigter Bindung als auch eine nicht-hydrolysierbare Gruppe mit Mercaptorest aufweist. Da dann jedoch nur noch zwei Gruppen für die Hydrolyse und Kondensation zur Verfügung stehen, kann damit nur ein relativ weicher Überzug hergestellt werden. Dies ließe sich z.B. dadurch kompensieren, daß noch eine weitere hydrolysierbare Siliciumverbindung mit vier hydrolysierbaren Gruppen, wie z.B. Trimethoxysilan oder Triethoxysilan, und/oder eine hydrolysierbare Aluminiumverbindung mit drei hydrolysierbaren Resten zugegeben wird.

Unter den gegebenenfalls vorhandenen hydrolysierbaren Aluminiumverbindungen sind diejenigen besonders bevorzugt, die die allgemeine Formel

$$AlX'_3 \qquad (III)$$

aufweisen, in der die Reste X', die gleich oder verschieden sein können, ausgewählt sind aus Halogen, Alkoxy, Alkoxycarbonyl und Hydroxy. Hinsichtlich der näheren (bevorzugten) Definition dieser Reste kann auf die Ausführungen im Zusammenhang mit erfindungsgemäß geeigneten hydrolysierbaren Siliciumverbindungen verwiesen werden. Die soeben genannten Gruppen können auch ganz oder teilweise durch Chelatliganden (z.B. Acetylaceton oder Acetessigsäureester) ersetzt sein.

Besonders bevorzugte Aluminiumverbindungen sind die Aluminiumalkoxide und -halogenide. In diesem Zusammenhang können als konkrete Beispiele genannt werden

Al(OCH$_3$)$_3$, Al(OC$_2$H$_5$)$_3$, Al(O-n-C$_3$H$_7$)$_3$,

Al(O-i-C$_3$H$_7$)$_3$, Al(OC$_4$H$_9$)$_3$, Al(O-i-C$_4$H$_9$)$_3$,

Al(O-sek-C$_4$H$_9$)$_3$, AlCl$_3$, AlCl(OH)$_2$

Bei Raumtemperatur flüssige Verbindungen, wie z.B. Aluminium-sek-butylat und Aluminium-isopropylat, werden besonders bevorzugt. Analoges gilt auch für die übrigen erfindungsgemäß eingesetzten hydrolysierbaren Verbindungen.

Geeignete hydrolysierbare Titan- und Zirkoniumverbindungen, die erfindungsgemäß eingesetzt werden

4

können, sind solche der allgemeinen Formel

$$MX_nR_{4-n} \qquad (II)$$

in der M Ti oder Zr bedeutet und X, R und n wie oben definiert sind. Dies gilt auch für die bevorzugten Bedeutungen von X und R. Besonders bevorzugt handelt es sich bei den Verbindungen der Formel (II) um solche, in denen n 4 ist.

Konkrete Beispiele für erfindungsgemäß einsetzbare Zirkonium- und Titanverbindungen sind die folgenden:

$TiCl_4$, $Ti(OC_2H_5)_4$, $Ti(OC_3H_7)_4$,

$Ti(O-i-C_3H_7)_4$, $Ti(OC_4H_9)_4$, $Ti(2$-ethylhexoxy$)_4$;

$ZrCl_4$, $Zr(OC_2H_5)_4$, $Zr(OC_3H_7)_4$, $Zr(O-i-C_3H_7)_4$, $Zr(OC_4H_9)_4$,

$ZrOCl_2$, $Zr(2$-ethylhexoxy$)_4$

Wie ersichtlich, können im Falle der Titan- und Zirkoniumverbindungen einige der an das Zentralatom gebundenen Reste durch Chelatliganden ersetzt sein.

Weitere hydrolysierbare Verbindungen, die erfindungsgemäß in untergeordneten Maße eingesetzt werden können, sind z.B. Bortrihalogenide und Borsäureester (wie z.B. $BCl_3$, $B(OCH_3)_3$ und $B(OC_2H_5)_3$), Zinntetrahalogenide und Zinntetraalkoxide (wie z.B. $SnCl_4$ und $Sn(OCH_3)_4$) und Vanadylverbindungen, wie z.B. $VOCl_3$ und $VO(OCH_3)_3$.

Wie für die Siliciumverbindungen der allgemeinen Formel (I) gilt auch für die übrigen erfindungsgemäß einsetzbaren hydrolysierbaren Verbindungen, daß die hydrolytisch abspaltbaren Reste vorzugsweise zu Hydrolyseprodukten führen, die ein geringes Molekulargewicht aufweisen. Bevorzugte Reste sind deshalb $C_{1-4}$-Alkoxy (z.B. Methoxy, Ethoxy und Propoxy) sowie Halogen (insbesondere Cl).

Bei Anwesenheit von Aluminium-, Titan- und/oder Zirkoniumverbindungen in der zu hydrolysierenden Mischung gelten die obigen Ausführungen hinsichtlich der Verhältnisse der einzelnen Gruppen und Verbindungen zueinander entsprechend. Betont werden muß in diesem Zusammenhang noch, daß die oben angegebenen Bereich sich auf eingesetzte Monomere, d.h. noch nicht vorkondensierte Verbindungen beziehen. Derartige Vorkondensate können erfindungsgemäß aber Verwendung finden, wobei diese Vorkondensate durch Einsatz einer einzigen Verbindung oder durch Einsatz mehrerer Verbindungen, die gegebenenfalls auch unterschiedliche Zentralatome aufweisen können, gebildet werden können.

Die Herstellung des erfindungsgemäßen Lacks kann in auf diesem Gebiet üblicher Art und Weise erfolgen. Werden praktisch ausschließlich (bei der Hydrolyse relativ reaktionsträge) Siliciumverbindungen eingesetzt, kann die hydrolytische Kondensation in den meisten Fällen dadurch erfolgen, daß man den zu hydrolysierenden Siliciumverbindungen, die entweder als solche oder gelöst in einem geeigneten Lösungsmittel vorliegen, die stöchiometrisch erforderliche Menge Wasser bzw. gegebenenfalls einen Überschuß an Wasser bei Raumtemperatur oder unter leichter Kühlung direkt zugibt (vorzugsweise unter Rühren und in Anwesenheit eines Hydrolyse- und Kondensationskatalysators) und die resultierende Mischung daraufhin einige Zeit (ein bis mehrere Stunden) rührt. Bei Anwesenheit der reaktiveren Verbindungen von Al, Ti und Zr, empfiehlt sich in der Regel eine stufenweise Zugabe des Wassers. Unabhängig von der Reaktivität der anwesenden Verbindungen erfolgt die Hydrolyse in der Regel bei Temperaturen zwischen -20 und 130°C, vorzugsweise zwischen 0°C und 30°C bzw. dem Siedepunkt des gegebenenfalls eingesetzten Lösungsmittels. Wie bereits angedeutet, hängt die beste Art und Weise der Zugabe von Wasser vor allem von der Reaktivität der eingesetzten Ausgangsverbindungen ab. So kann man z.B. die gelösten Ausgangsverbindungen langsam zu einem Überschuß an Wasser tropfen oder man gibt Wasser in einer Portion oder portionsweise den gegebenenfalls gelösten Ausgangsverbindungen zu. Es kann auch nützlich sein, das Wasser nicht als solches zuzugeben, sondern mit Hilfe von wasserhaltigen organischen oder anorganischen Systemen in das Reaktionssystem einzutragen. Als besonders geeignet hat sich in vielen Fällen die Eintragung der Wassermengen in das Reaktionsgemisch mit Hilfe von feuchtigkeitsbeladenen Adsorbentien, z.B. Molekularsieben, und wasserhaltigen organischen Lösungsmitteln, z.B. 80%igem Ethanol, erwiesen. Die Wasserzugabe kann auch über eine Reaktion erfolgen, bei der Wasser gebildet wird, z.B. bei der Esterbildung aus Säure und Alkohol.

Wenn ein Lösungsmittel verwendet wird, kommen neben den niederen aliphatischen Alkoholen (z.B. Ethanol und Isopropanol) auch Ketone, vorzugsweise niedere Dialkylketone, wie Aceton und Methylisobutylketon, Ether, vorzugsweise niedere Dialkylether wie Diethylether und Dibutylether, THF, Amide, Ester, insbesondere Essigsäureethylester, Dimethylformamid, und deren Gemische in Frage. Werden nur hydrolysierbare Siliciumverbindungen eingesetzt, kann sich der Einsatz von niederen Dialkylethern als Lösungsmittel als besonders vorteilhaft erweisen. Insbesondere wirkt die Verwendung dieser Ether einer zu schnellen Gelierung des Lacks entgegen, wenn dieser relativ viele Mercaptoreste aufweist.

Erfindungsgemäß bevorzugt eingesetzte Hydrolyse- und Kondensationskatalysatoren sind Protonen abspaltende Verbindungen. Beispiele hierfür sind organische und anorganische Säuren, wie Salzsäure, Ameisensäure und Essigsäure, wobei Salzsäure als Katalysator besonders bevorzugt wird. Die Gesamt-Katalysatorkonzentration kann z.B. bis zu 3 Mol pro Liter betragen.

Die Ausgangsverbindungen müssen nicht notwendigerweise bereits alle zu Beginn der Hydrolyse (Polykondensation) vorhanden sein, sondern in bestimmten Fällen kann es sich sogar als vorteilhaft erweisen, wenn nur ein Teil dieser Verbindungen zunächst mit Wasser in Kontakt gebracht wird und später die restlichen Verbindungen zugegeben werden.

Um insbesondere bei Verwendung von von Siliciumverbindungen verschiedenen hydrolysierbaren Verbindungen Ausfällungen während der Hydrolyse und Polykondensation so weit wie möglich zu vermeiden, wird es in diesem Fall bevorzugt, die Wasserzugabe in mehreren Stufen, z.B. in drei Stufen, durchzuführen. Dabei wird in der ersten Stufe z.B. ein Zehntel bis ein Zwanzigstel der zur Hydrolyse stöchiometrisch benötigten Wassermenge zugegeben. Nach kurzem Rühren folgt die Zugabe von einem Fünftel bis zu einem Zehntel der stöchiometrischen Wassermenge und nach weiterem kurzen Rühren wird schließlich eine stöchiometrische Wassermenge zugegeben, so daß am Schluß ein leichter Wasserüberschuß vorliegt.

Die Kondensationszeit richtet sich nach den jeweiligen Ausgangskomponenten und deren Mengenanteilen, dem gegebenenfalls verwendeten Katalysator, der Reaktionstemperatur, etc. Im allgemeinen erfolgt die Polykondensation bei Normaldruck, sie kann jedoch auch bei erhöhtem oder verringerten Druck durchgeführt werden.

Der so erhaltene Lack kann entweder als solcher oder nach teilweiser oder nahezu vollständiger Entfernung des verwendeten Lösungsmittels bzw. des während der Reaktion gebildeten Lösungsmittels im erfindungsgemäßen Beschichtungsverfahren eingesetzt werden. In einigen Fällen kann es sich als vorteilhaft erweisen, in dem nach der Polykondensation erhaltenen Lack das überschüssige Wasser und das gebildete und gegebenenfalls zusätzlich eingesetzte Lösungsmittel durch ein anderes Lösungsmittel zu ersetzen, um den Lack zu stabilisieren. Zu diesem Zweck kann der Lack z.B. im Vakuum bei leicht erhöhter Temperatur (bis maximal 80°C) so weit eingedickt werden, daß er noch problemlos mit einem anderen Lösungsmittel aufgenommen werden kann. Als Ersatz-Lösungsmittel haben sich insbesondere Essigester und Toluol bewährt. Derartige stabilisierte Lacke sind dann ohne optische Änderung und ohne merkliche Viskositätszunahne über mehrere Tage bis Wochen stabil.

Spätestens vor der Verwendung des Lacks können diesem gegebenenfalls noch übliche Lack-Additive zugegeben werden, wie z.B. Färbemittel, Füllstoffe, Oxidationsinhibitoren, Verlaufsmittel, UV-Absorber und dergleichen.

Ist eine Aushärtung des Lacks durch Bestrahlung beabsichtigt, so kann dem Lack (spätestens vor der Auftragung auf das Kunststoffsubstrat) noch ein geeigneter Initiator zugesetzt werden. Vorzugsweise wird ein Initiator zugesetzt, wenn die Aushärtung auf thermischem Wege erfolgen soll.

Überraschenderweise wurde festgestellt, daß für die UV-Härtung des erfindungsgemäß hergestellten Lacks die Anwesenheit eines Photoinitiators nicht erforderlich ist. Trotzdem können derartige Initiatoren dem Lack zugesetzt werden, wenngleich dies nicht bevorzugt wird.

Als Photoinitiatoren können z.B. die im Handel erhältlichen eingesetzt werden. Beispiele hierfür sind Irgacure 184 (1-Hydroxycyclohexylphenylketon), Irgacure 500 (1-Hydroxycyclohexylphenylketon, Benzophenon) und andere von der Firma Ciba-Geigy erhältliche Photoinitiatoren vom Irgacure-Typ; Darocur 1173, 1116, 1398, 1174 und 1020 (erhältlich von der Firma Merck), Benzophenon, 2-Chlorthioxanthon, 2-Methylthioxanthon, 2-Isopropylthioxanthon, Benzoin, 4,4'-Dimethoxybenzoin, Benzoinethylether, Benzoinisopropylether, Benzyldimethylketal, 1,1,1-Trichloracetophenon, Diethoxyacetophenon und Dibenzosuberon.

Als thermische Initiatoren, kommen insbesondere organische Peroxide in Form von Diacylperoxiden, Peroxydicarbonaten, Alkylperestern, Dialkylperoxiden, Perketalen, Ketonperoxiden und Alkylhydroperoxiden in Frage. Konkrete und bevorzugte Beispiele für thermische Initiatoren sind Dibenzoylperoxid, tert-Butylperbenzoat sowie Azobisisobutyronitril.

Der Initiator kann dem Lack in üblichen Mengen zugegeben werden. So kann z.B. einem Lack, der 30 bis 50 Gewichtsprozent Feststoff enthält, Initiator in einer Menge von z.B. 0,5 bis 5 Gewichtsprozent, insbesondere 1 bis 3 Gewichtsprozent, bezogen auf den Lack, zugesetzt werden.

Der gegebenenfalls mit einem Photoinitiator versehene Lack wird dann auf ein geeignetes Substrat aufgebracht. Für diese Beschichtung können übliche Beschichtungsverfahren angewandt werden, z.B. Tauchen, Fluten, Gießen, Schleudern, Spritzen oder Aufstreichen.

Erfindungsgemäß kann der wie oben beschrieben hergestellte Lack auf Substrate aus allen denkbaren Kunststoffen aufgebracht werden. Konkrete Beispiele für derartige Kunststoffe sind Polyolefine (z.B. Polyethylen, Polypropylen, Polystyrol), gesättigte, ungesättigte, aromatische und aliphatische Polyester (wie z.B. Polymethylmethacrylat und Polyethylenterephthalat), Polyether, Polycarbonate, Polyamide, Polyurethane, kautschukartige Polymere etc.

Um eine ausgezeichnete Haftung des Überzugs auf dem Kunststoffsubstrat zu gewährleisten, empfiehlt es sich in der Regel, das Kunststoffsubstrat vor der Beschichtung einer Oberflächenbehandlung, z.B. durch Auslaugen, Grundieren mit einem Primer, Coronabehandlung usw., zu unterziehen. Überraschenderweise wurde festgestellt, daß eine derartige Oberflächenbehandlung im Falle einiger Kunststoffe, wie z.B. Polymethylmethacrylat, Polystyrol und PVC, auch weggelassen werden kann und trotzdem eine ausgezeichnete Haftung zwischen Substrat und Überzug erzielt wird.

Vor der Härtung wird der aufgetragene Lack vorzugsweise abtrocknen gelassen. Danach kann er, abhängig von der Art bzw. Anwesenheit eines Initiators, thermisch oder durch Bestrahlen (z.B. mit einem UV-Strahler, einem Laser usw.) in an sich bekannter Weise gehärtet werden.

Erfindungsgemäß besonders bevorzugt wird die Härtung des aufgetragenen Lacks durch Bestrahlung. In diesem Fall kann es sich von Vorteil erweisen, nach der Strahlungshärtung eine thermische Härtung durchzuführen, insbesondere um einen eventuell vorhandenen Überschuß an ungesättigten Gruppen oder noch vorhandenes Lösungsmittel zu entfernen.

Mit dem erfindungsgemäßen Verfahren werden in der Regel Schichtdicken von 5 bis 50, insbesondere 10 bis 20 μm erreicht.

Selbstverständlich ist das erfindungsgemäße Verfahren nicht darauf beschränkt, nur eine einzige Lackschicht auf dem Substrat aufzubringen, sondern es besteht auch die Möglichkeit nach dem Auftragen und gegebenenfalls Aushärten einer Schicht weitere Schichten aufzutragen und damit zu Multi-Layer-Strukturen zu gelangen.

Das erfindungsgemäße Beschichtungsverfahren bzw. der erfindungsgemäße Lack führt insbesondere zu den folgenden überraschenden Vorteilen:

Es können hoch kratzfeste, gut auf dem Kunststoffsubstrat haftende Überzüge erhalten werden, die eine sehr gute Lichtdurchlässigkeit zeigen.

Besonders bei thermisch wenig belastbaren Substraten kann durch UV-Behandlung bei milden Bedingungen eine gute Aushärtung in kürzester Zeit erzielt werden. Die UV-Härtung läßt sich je nach Leistung des Strahlers in weniger als 60 Sekunden durchführen. Dies führt im Vergleich mit thermisch härtenden Systemen zu ganz neuen Anwendungsperspektiven in der automatischen Produktion. Auch die Tatsache, daß bei der UV-Härtung auf einen Photoinitiator verzichtet werden kann, zählt zu den wesentlichen mit der vorliegenden Erfindung verbundenen Vorteilen.

Im Vergleich zu Systemen auf Basis von Silanen mit ethylenisch ungesättigter Doppelbindung im Molekül wird durch den erfindungsgemäßen Zusatz von hydrolysierbaren Verbindungen mit Mercaptogruppen sowohl die Endhärte als auch die Reaktionsgeschwindigkeit erheblich verbessert.

Im Falle von Polymethylmethacrylat, Polystyrol, PVC, etc. als Kunststoffsubstrat kann eine ausgezeichnete Haftung ohne Vorbehandlung der Oberfläche des Substrats erzielt werden.

Die folgenden Beispiele erläutern die vorliegende Erfindung, ohne sie zu beschränken.

**Beispiel 1**

Eine Mischung aus 0,45 Mol Vinyltrimethoxysilan und 0,05 Mol Mercaptopropyltriethoxysilan wurde bei 15 bis 20°C mit 1,5 Mol Wasser, das in Form von verdünnter Salzsäure (0,1-normal) eingesetzt wurde, versetzt. Danach wurde die Reaktionsmischung unter leichter Kühlung 2 Stunden lang bei der angegebenen Temperatur gerührt.

Daraufhin wurden 125 ml (250 ml pro Mol Alkoxysilan) Ethylacetat zugesetzt. Pro Mol Alkoxysilan wurden bei 30 bis 35°C ca. 140 g Lösungsmittelgemisch abgezogen. Die danach zähflüssige Lösung wurde nochmals in der gleichen Menge Ethylacetat aufgenommen und erneut einrotiert. Zum Schluß wurde die zähflüssige Lösung auf 250 g pro Mol Alkoxysilan mit Ethylacetat aufgefüllt.

Die kinematische Viskosität des so erhaltenen Lacks lag bei 4,9 mm²/Sekunden und der Feststoffgehalt betrug 35 Gewichtsprozent. Dieser Lack ließ sich nach 14tägiger Lagerung noch problemlos verarbeiten.

Der wie oben hergestellte Lack wurde mit 1 bis 3 Gewichtsprozent, bezogen auf das Gesamtgewicht des Lacks, Photoinitiator (Irgacure 184 und Irgacure 500) versetzt, und dann auf ein Substrat aus Polymethylmethacrylat aufgetragen. Bei der Beschichtung mit einem Schlitten wurde eine Schichtdicke von 10 bis 15 μm erzielt, während die Schichtdicke beim Tauchverfahren 5 μm betrug.

Der aufgetragene und bei Raumtemperatur angetrocknete Lack wurde dann unter den folgenden Bedingungen gehärtet:

UV-Härtung, 500 W, 120 Sekunden, Abstand 17 cm (Loctite-Gerät) oder 5 m/Minute Bandgeschwindigkeit bei 2 x 2000 W (Beltron-Gerät).

Der so gehärtete Lack wurde hinsichtlich seiner Eigenschaften untersucht und es wurden die folgenden Ergebnisse erhalten:

Ritzhärte: 10 g

EP 0 450 625 B1

Bleistifthärte: 5H
Abriebtest nach 100 bzw. 300 Zyklen: 2 bzw. 8%

**Beispiel 2**

Eine Mischung aus 0,4 Mol Vinyltriethoxysilan, 0,05 Mol Propyltrimethoxysilan und 0,05 Mol Thiopropyltriethoxysilan wurde gemäß dem in Beispiel 1 beschriebenen Verfahren hydrolysiert, aufgetragen und gehärtet. Es wurden im wesentlichen die gleichen Ergebnisse wie in Beispiel 1 erzielt.

**Beispiel 3**

Eine Mischung aus 0,35 Mol Vinyltriethoxysilan, 0,13 Mol Tetraethoxysilan und 0,02 Mol Thiopropyltriethoxysilan wurde auf die in Beispiel 1 beschriebene Art und Weise hydrolysiert, aufgetragen und gehärtet. Es wurden im wesentlichen dieselben Ergebnisse wie in Beispiel 1 erzielt.

**Beispiel 4**

37 g (0,25 Mol) Vinyltrimethoxysilan (VTMO), 49 g (0,25 Mol) Mercaptopropyltrimethoxysilan (MPTMO), 250 g Ethylacetat und 27 g 0,1 n HCl wurden bei 25°C 1 h bzw. 2 h lang gerührt.
Die resultierende Reaktionsmischung wurde dann nach 3 Varianten aufgearbeitet.

Variante 1 (Rührzeit 2 h):

Das Ethylacetat wurde bei 30°C am Rotationsverdampfer abgedampft und der Rückstand wurde sofort als Beschichtungslösung eingesetzt.

Variante 2 (Rührzeit 2 h):

Die Mischung wurde mit Wasser ausgeschüttelt, bis sie säurefrei war und dann wie bei Variante 1 weiterbehandelt.

Variante 3 (Rührzeit 1 h):

Es wurde noch 1 h bei 100°C gerührt und dann wie bei Variante 2 weiterverfahren.
Die wie oben erhaltenen Beschichtungslösungen wurden durch Tauchen auf ein Substrat aus Polymethylmethacrylat aufgetragen, abtrocknen gelassen und dann 10 sec. lang einer UV-Strahlung ausgesetzt (Strahlerleistung 1000 Watt). Die so erhaltenen Ergebnisse sind in der Tabelle 1 zusammengefaßt.
Besonders bemerkenswert sind die mit dem vergleichsweise einfachen Beschichtungssystem erzielten (sehr geringen) Streulichtverluste nach 100 Zyklen. Ebenso bemerkenswert ist die Abwesenheit eines Photoinitiators bei der UV-Härtung.
Die gemäß den Varianten 1 bis 3 erhaltenen Lösungen erwiesen sich als über mehrere Wochen haltbar.

**Beispiel 5**

Es wurde wie im Beispiel 4, Variante 2, vorgegangen, wobei das Molverhältnis von VTMO zu MPTMO 1:1 bzw. 9:1 betrug. Die erhaltenen Lösungen wurden in einer Schichtdicke von etwa 20 μm durch Tauchen auf ein Substrat aus PMMA aufgetragen und dann, gegebenenfalls nach Zugabe eines UV-Initiators (Irgacure[(R)] 500), einer UV-Härtung unterzogen, wobei Strahlerleistung und Belichtungszeit variiert wurden. Die erhaltenen Ergebnisse hinsichtlich Streulichtverlust (Taber-Abraser, 100 Zyklen) und Haftung (Gitterschnitt) sind in Tabelle 2 wiedergegeben.
Bemerkenswert an diesen Ergebnissen ist unter anderem, daß sich zumindest bei einem Molverhältnis von VTMO zu MPTMO von 1:1 die Anwesenheit eines Photoinitiators bei der UV-Härtung sogar als nachteilig für die Kratzfestigkeit des gehärteten Überzugs erweist. Gleichzeitig zeigen diese Ergebnisse, daß mit dem erfindungsgemäßen Beschichtungssystem eine zufriedenstellende Härtung innerhalb von Sekunden möglich ist.

Tabelle 1

| Herstellungs-variante | Feststoff-gehalt (%) | Viskosität $(mm^2/sec)$ | Schicht-dicke (µm) | Streulichtverlust (%) nach | | | |
|---|---|---|---|---|---|---|---|
| | | | | 100 | 500 | 1000 | Zyklen * |
| 1 | 40 | 3,1 | 3 | 1,0 | 6,8 | 10,3 | |
| 2 | 45 | 4,1 | 4 | 1,6 | 10,4 | 20,8 | |
| 3 | 45 | 22,3 | 8 | 1,3 | 7,2 | 14,9 | |

* Bestimmt mit Taber-Abraser

EP 0 450 625 B1

Tabelle 2

| Molverhältnis<br>VTMO : MPTMO | Initiator | UV-Leistung<br>(W) | Belichtungszeit<br>(sec) | Streulicht-<br>verlust (%) | Gitterschnitt |
|---|---|---|---|---|---|
| 9 : 1 | 2 % | 1000 | 30 | 9,2 | |
| 9 : 1 | – | 1000 | 30 | 15,6 | |
| 9 : 1 | – | 1200 | 20 | 5,0 | 1 – 2 |
| 9 : 1 | – | 1200 | 20 | 4,5 | 2 |
| 9 : 1 | – | 1200 | 12 | 17 | 1 |
| 1 : 1 | 2 % | 1000 | 30 | 4,2 | |
| 1 : 1 | 0,5 % | 1000 | 30 | 2,8 | |
| 1 : 1 | – | 1000 | 30 | 2,5 | |
| 1 : 1 | – | 1200 | 20 | 2,5 | 0 – 1 |
| 1 : 1 | – | 1200 | 20 | 2,1 | 0 – 1 |
| 1 : 1 | – | 1200 | 20 | 1,7 | 0 – 1 |
| 1 : 1 | – | 1200 | 12 | 2,2 | 1 |

EP 0 450 625 B1

**Patentansprüche**

1. Verfahren zur Beschichtung eines Kunststoffsubstrats, dadurch gekennzeichnet, daß man

   (a) auf das Kunststoffsubstrat einen Lack aufbringt, der hergestellt wurde durch hydrolytische Kondensation einer oder mehrerer hydrolysierbarer Siliciumverbindungen sowie gegebenenfalls einer oder mehrerer hydrolysierbarer Verbindungen von Aluminium, Titan und/oder Zirkonium in einer Menge von höchstens 50 Molprozent, bezogen auf die Gesamtmenge an Silicium-, Aluminium-, Titan- und Zirkoniumverbindungen, wobei 1 bis 40 Molprozent aller an die obigen Elemente gebundenen Gruppen nicht-hydrolysierbare Gruppen sind, die eine ethylenisch ungesättigte Bindung aufweisen, und zusätzlich an den obigen Elementen nicht-hydrolysierbare Gruppen, die über einen Mercaptorest verfügen, in einer solchen Menge vorhanden sind, daß das Verhältnis von ethylenisch ungesättigten Bindungen zu Mercaptoresten in bzw. an nicht-hydrolysierbaren Gruppen 25:1 bis 1:1 beträgt;
   (b) den Lack durch Bestrahlung härtet; und gegebenenfalls
   (c) eine thermische Nachhärtung des gehärteten Überzugs durchführt; oder
   (b') den Lack thermisch härtet.

2. Verfahren nach Anspruch 1, dadurch gekennzeichnet, daß es sich bei den hydrolysierbaren Siliciumverbindungen um solche der allgemeinen Formel

$$SiX_nR_{4-n} \qquad (I)$$

   handelt, in der die Reste X, die gleich oder verschieden sein können, ausgewählt sind aus Halogen, Alkoxy, Aryloxy, Acyloxy und Hydroxy, die Reste R, die gleich oder verschieden sein können, ausgewählt sind aus Alkyl, Alkenyl, Alkinyl und Aryl, wobei die oben genannten Gruppen gegebenenfalls einen oder mehrere unter den Reaktionsbedingungen inerte Substituenten aufweisen können, und n eine ganze Zahl von 1 bis 4 ist.

3. Verfahren nach irgendeinem der Ansprüche 1 und 2, dadurch gekennzeichnet, daß es sich bei den hydrolysierbaren Verbindungen von Ti und Zr um solche der allgemeinen Formel

$$MX_nR_{4-n} \qquad (II)$$

   handelt, in der M für Ti oder Zr steht und X, R und n wie oben definiert sind.

4. Verfahren nach irgendeinem der Ansprüche 1 bis 3, dadurch gekennzeichnet, daß es sich bei den hydrolysierbaren Aluminiumverbindungen um solche der allgemeinen Formel

$$AlX'_3 \qquad (III)$$

   handelt, in der die Reste X', die gleich oder verschieden sein können, ausgewählt sind aus Halogen, Alkoxy, Alkoxycarbonyl und Hydroxy und einige dieser Reste durch einen Chelatliganden ersetzt sein können.

5. Verfahren nach irgendeinem der Ansprüche 1 bis 4, dadurch gekennzeichnet, daß die nicht-hydrolysierbaren Gruppen mit ethylenisch ungesättigter Doppelbindung ausgewählt sind aus Alkenyl, insbesondere Vinyl, 1-Propenyl, 2-Propenyl und Butenyl, Styryl, (Meth)acryloxyalkyl und Mischungen derselben.

6. Verfahren nach irgendeinem der Ansprüche 1 bis 5, dadurch gekennzeichnet, daß die nicht-hydrolysierbaren Gruppen mit Mercaptorest ausgewählt sind aus Mercaptoalkylresten, insbesondere 3-Mercaptopropyl, 4-Mercaptobutyl, 6-Mercaptohexyl und Mischungen derselben.

7. Verfahren nach irgendeinem der Ansprüche 1 bis 6, dadurch gekennzeichnet, daß 5 bis 30, insbesondere 10 bis 25 Molprozent aller an Si, Ti, Zr und Al gebundenen Gruppen nicht-hydrolysierbare Gruppen sind, die eine ethylenisch ungesättigte Bindung aufweisen.

8. Verfahren nach irgendeinem der Ansprüche 1 bis 7, dadurch gekennzeichnet, daß das Molverhältnis aller in nicht-hydrolysierbaren Gruppen anwesenden ethylenisch ungesättigten Bindungen zu allen an nicht-hydrolysierbare Gruppen gebundenen Mercaptoresten 20:1 bis 2:1, insbesondere 10:1 bis 5:1 beträgt.

9. Verfahren nach irgendeinem der Ansprüche 1 bis 8, dadurch gekennzeichnet, daß das Molverhältnis aller nicht-hydrolysierbaren Gruppen mit ethylenisch ungesättigter Bindung zu allen hydrolysierbaren Gruppen und Hydroxygruppen 1:1 bis 1:50, vorzugsweise 1:2 bis 1:30 und insbesondere 1:3 bis 1:15 beträgt.

10. Verfahren nach irgendeinem der Ansprüche 1 bis 9, dadurch gekennzeichnet, daß der Anteil von nicht-hydrolysierbaren Gruppen mit ethylenisch ungesättigter Bindung an den insgesamt vorhandenen nicht-hydrolysierbaren Gruppen 2 bis 96%, vorzugsweise 3 bis 50% und insbesondere 7 bis 30% beträgt.

11. Verfahren nach irgendeinem der Ansprüche 1 bis 10, dadurch gekennzeichnet, daß es sich bei dem Kunststoff um Polymethylmethacrylat, Polyvinylchlorid, Polyalkylenterephthalat, Polycarbonat oder Polyolefin, insbesondere um Polymethylmethacrylat, Polystyrol oder PVC handelt.

12. Verfahren zur Herstellung eines Lacks für die Beschichtung von Kunststoffsubstraten, dadurch gekennzeichnet, daß man eine oder mehrere hydrolysierbare Siliciumverbindungen sowie gegebenenfalls eine oder mehrere hydrolysierbare Verbindungen von Al, Ti und/oder Zr in einer Menge von höchstens 50 Molprozent, bezogen auf die Gesamtmenge an Si-, Al-, Ti- und Zr-Verbindungen, in denen 1 bis 40 Molprozent aller nicht-hydrolysierbaren Gruppen eine ethylenisch ungesättigte Bindung aufweisen und in denen zusätzlich nicht-hydrolysierbare Gruppen, die über einen Mercaptorest verfügen, in einer solchen Menge vorhanden sind, daß das Verhältnis von ethylenisch ungesättigten Bindungen zu Mercaptoresten in bzw. an nicht-hydrolysierbaren Gruppen 25:1 bis 1:1 beträgt, gegebenenfalls in Anwesenheit eines Katalysators und/oder eines Lösungsmittels durch Einwirkung von Wasser oder Feuchtigkeit hydrolytisch kondensiert.

13. Lack für die Beschichtung von Kunststoffsubstraten, erhältlich nach dem Verfahren von Anspruch 12.

## Claims

1. Process for coating a plastic substrate, characterized in that
   (a) a coating composition is applied onto a plastic substrate, said coating composition having been prepared by hydrolytic condensation of one or more hydrolyzable silicon compounds and, optionally, one or more hydrolyzable compounds of aluminum, titanium and/or zirconium in an amount of not more than 50 mol percent, based on the total amount of compounds of silicon, aluminum, titanium and zirconium, 1 to 40 mol percent of all groups bonded to the above elements being non-hydrolyzable groups having an ethylenically unsaturated bond, and non-hydrolyzable groups incorporating a mercapto radical being additionally present on the above elements in such an amount as to result in a ratio of ethylenically unsaturated bonds to mercapto radicals in or on, respectively non-hydrolyzable groups of from 25:1 to 1:1;
   (b) the coating composition is cured by irridiation; and, optionally,
   (c) a thermal post-curing of the cured coating is carried out; or
   (b') the coating composition is cured thermally.

2. Process according to claim 1, characterized in that the hydrolyzable silicon compounds are those of the general formula

   $$SiX_nR_{4-n} \qquad (I)$$

   wherein the radicals X, which may be the same or different, are selected from halogen, alkoxy, aryloxy, acyloxy and hydroxy, the radicals R, which may be the same or different, are selected from alkyl, alkenyl, alkynyl and aryl, the groups mentioned above having optionally one or more substituents inert under the reaction conditions, and n is an integer of from 1 to 4.

3. Process according to any one of claims 1 and 2, characterized in that the hydrolyzable compounds of Ti and Zr are those of the general formula

   $$MX_nR_{4-n} \qquad (II)$$

   wherein M represents Ti or Zr and X, R and n are as defined above.

4. Process according to any one of claims 1 to 3, characterized in that the hydrolyzable aluminum compounds are those of the general formula

   $$AlX'_3 \qquad (III)$$

   wherein the radicals X', which may be the same or different, are selected from halogen, alkoxy, alkoxycarbonyl and hydroxy and some of said radicals may be replaced by chelate ligands.

5. Process according to any one of claims 1 to 4, characterized in that the non-hydrolyzable groups having an ethylenically unsaturated double bond are selected from alkenyl, particularly vinyl, 1-propenyl, 2-propenyl and butenyl, styryl, (meth)acryloxyalkyl and mixtures thereof.

6. Process according to any one of claims 1 to 5, characterized in that the non-hydrolyzable groups incorporating mercapto radicals are selected from mercaptoalkyl radicals, particularly 3-mercaptopropyl, 4-mercaptobutyl, 6-mercaptohexyl and mixtures thereof.

7. Process according to any one of claims 1 to 6, characterized in that 5 to 30, particularly 10 to 25 mol percent of all non-hydrolyzable groups bonded to Si, Ti, Zr and Al are groups with an ethylenically unsaturated bond.

8. Process according to any one of claims 1 to 7, characterized in that the molar ratio of all ethylenically unsaturated bonds present in non-hydrolyzable groups to all mercapto radicals bonded to non-hydrolyzable groups ranges from 20:1 to 2:1, particularly from 10:1 to 5:1.

9. Process according to any one of claims 1 to 8, characterized in that the molar ratio of all non-hydrolyzable groups having ethylenically unsaturated bonds to all hydrolyzable groups and hydroxy groups ranges from 1:1 to 1:50, preferably from 1:2 to 1:30 and particularly from 1:3 to 1:15.

10. Process according to any one of claims 1 to 9, characterized in that the fraction of non-hydrolyzable groups having ethylenically unsaturated bonds of the total of non-hydrolyzable groups present is 2 to 96%, preferably 3 to 50% and particularly 7 to 30%.

11. Process according to any one of claims 1 to 10, characterized in that the plastic is polymethyl methacrylate, polyvinyl chloride, polyalkylene terephthalate, polycarbonate or polyolefin, particularly polymethyl methacrylate, polystyrene or PVC.

12. Process for the preparation of a coating composition for the coating of plastic substrates, characterized in that one or more hydrolyzable silicon compounds as well as, optionally, one or more hydrolyzable compounds of Al, Ti and/or Zr in an amount of not more than 50 mol percent, based on the total amount of compounds of Si, Al, Ti and Zr, wherein 1 to 40 mol percent of all non-hydrolyzable groups have an ethylenically unsaturated bond and wherein additionally non-hydrolyzable groups incorporating a mercapto radical are present in such an amount as to result in a ratio of ethylenically unsaturated bonds to mercapto radicals in or on, respectively non-hydrolyzable groups of from 25:1 to 1:1 are hydrolytically condensed by the action of water or moisture, optionally in the presence of a catalyst and/or a solvent.

13. Coating composition for the coating of plastic substrates, obtainable according to the process of claim 12.


## Revendications

1. Procédé de revêtement d'un substrat de matière plastique, caractérisé en ce que
   (a) On dépose sur le substrat de matière synthétique un vernis préparé par condensation hydrolytique d'un ou plusieurs composés de silicium hydrolysables ainsi qu'éventuellement d'un ou plusieurs composés hydrolysa- bles d'aluminium, de titane et/ou de zirconium en une quantité d'au plus 50% molaire, par rapport à la quantité totale des composés de silicium, d'aluminium, de titane et de zirconium, de 1 à 40% molaire de tous les groupes liés aux éléments ci-dessus étant des groupes non hydrolysables qui présentent une liaison éthylèniquement insaturée, et outre les éléments ci-dessus, des groupes mon hydrolysables qui disposent d'un radical mercapto, en une quantité telle que le rapport des liaisons éthylèniquement insaturés aux radicaux mercapto dans ou selon les cas sur les groupes non hydrolysables s'élève à 25:1 à 1:1 ;
   (b) on durcit le vernis par irradiation ; et le cas échéant
   (c) on réalise un post-durcissement thermique du revêtement durci ; ou
   (b') on durcit thermiquement le vernis.

2. Procédé selon la revendication 1, caractérisé en ce que les composés de silicium hydrolysables sont des composés de formule générale
$$SiX_nR_{4-n} \qquad (I)$$
dans laquelle les radicaux X qui peuvent être identiques ou différents, sont choisis parmi halogène, alcoxy, aryloxy, acyloxy, et hydroxy, les radicaux R, qui peuvent être identiques ou différents, sont choisis parmi alkyle, alcényle, alcynyle et aryle, les groupes mentionnés ci-dessus pouvant présenter le cas échéant un ou plusieurs substituants inertes dans les conditions de la réaction, et n est un nombre entier allant de 1 à 4.

3. Procédé selon l'une quelconque des revendications 1 et 2, caractérisé en ce que les composés hydrolysables de Ti et Zr sont des composés de formule générale

$$MX_nR_{4-n} \qquad (II)$$

dans laquelle M représente Ti ou Zr et X, R et n sont tels que définis ci-dessus.

4. Procédé selon l'une quelconque des revendications 1 à 3, caractérisé en ce que les composés d'aluminium hydrolysables sont des composés de formule générale

$$AlX'_3 \qquad (III)$$

dans laquelle les radicaux X', qui peuvent être identiques ou différents, sont choisis parmi halogène, alcoxy, alcoxycarbonyle, et hydroxy et quelques uns de ces radicaux peuvent être remplacés par un coordinat chélate.

5. Procédé selon l'une quelconque des revendications 1 à 4, caractérisé en ce que les groupes non hydrolysables à double liaison éthylèniquement insaturée sont choisis parmi alcényle, en particulier vinyle, 1-propényle, 2-propényle et butényle, styryle, (Méth)acryloxyalkyle et leurs mélanges.

6. Procédé selon l'une quelconque des revendications 1 à 5, caractérisé en ce que les groupes non hydrolysables à radical mercapto sont choisis parmi les radicaux mercaptoalkyles, en particulier 3-mercaptopropyle, 4-mercaptobutyle, 6-mercaptohexyle, et leurs mélanges.

7. Procédé selon l'une quelconque des revendications 1 à 6, caractérisé en ce que de 5 à 30, en particulier de 10 à 25% molaire de tous les groupes liés à Si, Ti, Zr et Al sont des groupes non hydrolysables qui présentent une liaison éthylèniquement insaturée.

8. Procédé selon l'une quelconque des revendications 1 à 7, caractérisé en ce que le rapport molaire de toutes les liaisons éthylèniquement insaturées présentes dans les groupes non hydrolysables à tous les groupes mercapto liés à des groupes non hydrolysables s'élève à 20:1 à 2:1, en particulier de 10:1 à 5:1.

9. Procédé selon l'une quelconque des revendications 1 à 8, caractérisé en ce que le rapport molaire de tous les groupes non hydrolysables à liaison éthylèniquement insaturée à tous les groupes hydrolysables et groupes hydroxy s'élève à 1:1 à 1:50, de préférence de 1:2 à 1:30 et en particulier de 1:3 à 1:15.

10. Procédé selon l'une quelconque des revendications 1 à 9, caractérisé en ce que la proportion de groupes non hydrolysables à liaison éthylèniquement insaturée par rapport à l'ensemble des groupes non hydrolysables présents s'élève à 2 à 96%, en particulier 3 à 50% et en particulier 7 à 30%.

11. Procédé selon l'une quelconque des revendications 1 à 10, caractérisé en ce que la matière plastique est le poly(méthacrylate de méthyle), le poly(chlorure de vinyle), le téréphtalate de polyalkylène, un polycarbonate ou une polyoléfine, en particulier le poly(méthacrylate de méthyle), le polystyrène ou le PVC.

12. Procédé de préparation d'un vernis pour le revêtement de substrats en matière plastique, caractérisé en ce qu'on condense par hydrolyse un ou plusieurs composés de silicium hydrolysables ainsi que le cas échéant un ou plusieurs composés hydrolysables d'Al, Ti et/ou Zr en une quantité d'au plus 50% molaire, par rapport à la quantité totale de composés de Si-, Al-, Ti-, et Zr-, où de 1 à 40% molaire de tous les groupes non hydrolysables présentent une liaison éthylèniquement insaturée et où les groupes non hydrolysables qui disposent d'un radical mercapto sont présents en une quantité telle que le rapport des liaisons éthylèniquement insaturées aux radicaux mercapto dans ou sur les groupes non hydrolysables s'élève de 25:1 à 1:1, le cas échéant en présence d'un catalyseur et/ou d'un solvant, par action de l'eau ou de l'humidité.

13. Vernis pour le revêtement de substrats en matière plastique que l'on peut obtenir selon le procédé de la revendication 12.